# EUROPÄISCHE PATENTSCHRIFT

(11) **EP 2 133 250 B1**
(45) Veröffentlichungstag und Bekanntmachung des Hinweises auf die Patenterteilung: **14.08.2013**
(21) Anmeldenummer: 09007390.9
(22) Anmeldetag: 04.06.2009
(51) Int. Cl.: B60T 15/04, B60T 15/18

(54) **Parkbremsventilanordnung für ein Bremssystem eines Nutzfahrzeuges**
Park brake valve assembly for a braking system of a commercial vehicle
Agencement de soupape de frein de stationnement pour un système de freinage d'un véhicule utilitaire

(30) Priorität: 11.06.2008 DE 102008027733
(43) Veröffentlichungstag der Anmeldung: 16.12.2009
(73) Patentinhaber: KNORR-BREMSE Systeme für Nutzfahrzeuge GmbH, 80809 München (DE)
(72) Erfinder: Kaupert, Oliver, 80995 München (DE)
(74) Vertreter: Schönmann, Kurt

(56) Entgegenhaltungen:
- EP-A- 1 386 810
- EP-A- 1 571 061
- WO-A-2007/010490
- DE-U1-202005 015 482
- US-A1- 2005 023 888

## Beschreibung

Die Erfindung betrifft eine elektrisch gesteuerte Parkbremsventilanordnung für ein Bremssystem eines Nutzfahrzeuges, wobei die Parkbremsventilanordnung einen Anschluss aufweist, der dazu vorgesehen ist, mit einer Anhängersteuerventilanordnung verbunden zu werden, und wobei die Parkbremsventilanordnung dazu ausgelegt ist, in einer ersten Parkbremsbetriebsart die Parkbremsen des Nutzfahrzeuges zu betätigen und den Anschluss so mit Druck zu beaufschlagen, dass die Parkbremsen eines an die Anhängersteuerventilanordnung angeschlossenen Anhängers ebenfalls betätigt werden.

Nutzfahrzeugbremsanlagen umfassen ein Betriebsbremssystem und ein Parkbremssystem, die zumeist unabhängig voneinander pneumatisch oder elektropneumatisch gesteuert werden. Parkbremssysteme umfassen zumeist Federspeicherzylinder, die in ihrem entlüfteten Zustand das Fahrzeug bremsen, während die Parkbremse durch Belüften der Federspeicherzylinder gelöst werden kann.
Die Parkbremsen eines mit einem Nutzfahrzeug verbundenen Anhängers werden über eine Anhängersteuerventilanordnung betätigt, die pneumatisch mit einer Parkbremsventilanordnung des Nutzfahrzeugs verbunden werden kann. Dabei gibt es Nutzfahrzeug-Hersteller, die ein Zugfahrzeug mit Anhänger so in Parkstellung versetzen, dass der Anhänger mitbremst, während andere Nutzfahrzeug-Hersteller ein Nutzfahrzeug mit Anhänger so in Parkstellung versetzen, dass der Anhänger nicht mitbremst.

Es sind bereits elektronisch kontrollierte Parkbremsventilanordnungen für Nutzfahrzeuge mit Anhänger bekannt. Diese sehen zwei pneumatische Energieabflüsse zu einer Anhängersteuerventilanordnung vor, wobei einer die Variante bedient, bei der der Anhänger in Parkstellung bremst, und einer die Variante, bei der der Anhänger in Parkstellung nicht bremst. Der jeweils nicht benötigte Anschluss muss verschlossen werden, was einen zusätzlichen Arbeitsschritt erfordert und zusätzliche Materialkosten verursacht.

Derartige Anordnungen sind aus den EP 1 571 061 A1 bzw. DE 202005015482 U1 bekannt.

Der Erfindung liegt daher die **Aufgabe** zugrunde, eine elektrisch kontrollierte Parkbremsventilanordnung derart weiterzubilden, dass die Betriebsarten "Anhänger bremst in Parkstellung mit" und "Anhänger bremst in Parkstellung nicht mit" in einer einzigen elektropneumatischen Schaltung in kostengünstiger Weise realisiert werden und der Arbeitschritt des Verschließens des jeweils nicht benötigten Ausgangs zur Anhängersteuerventilanordnung entfallen kann.

Diese Aufgabe wird durch die Merkmale des unabhängigen Anspruchs gelöst.

Vorteilhafte Ausgestaltungen und Weiterbildungen der Erfindung ergeben sich aus den abhängigen Ansprüchen.

Die Erfindung baut auf dem gattungsgemäßen Stand der Technik dadurch auf, dass die Parkbremsventilanordnung weiterhin dazu ausgelegt ist, in einer zweiten Parkbremsbetriebsart die Parkbremsen des Nutzfahrzeugs zu betätigen und den Anschluss so mit Druck zu beaufschlagen, dass die Parkbremsen eines an die Anhängersteuerventilanordnung angeschlossenen Anhängers nicht betätigt werden. Auf diese Weise ist es möglich, mit einer elektropneumatischen Schaltung, die nur einen pneumatischen Steuerausgang zur Anhängersteuerventilanordnung benötigt, Nutzfahrzeuge mit Anhänger zu bedienen, bei denen in Parkstellung der Anhänger wahlweise in einem gebremsten oder in einem ungebremsten Zustand sein kann.

Eine pneumatische Verrohrung ins Fahrerhaus des Nutzfahrzeugs, um die Parkbremsventilanordnung zu bedienen, wird nicht benötigt, da es sich um ein elektrisch gesteuertes System handelt.

Es ist vorgesehen, dass die Parkbremsventilanordnung ein Relaisventil zum Betätigen der Parkbremsen des Nutzfahrzeugs umfasst, wobei ein Steuereingang des Relaisventils mit dem Ausgang eines ersten Magnetventils verbunden ist und ein Eingang des ersten Magnetventils über eine erste Steuerleitung mit dem Anschluss und dem Ausgang eines zweiten Magnetventils verbunden ist, über das die erste Steuerleitung mit einem Druck beaufschlagt werden kann. So kann eine Anordnung von Ventilen realisiert werde, die es erlaubt, für den Betriebszustand "Fahren" sowohl den Anschluss zur Anhängersteuerventilanordnung, als auch die Parkbremsen des Zugfahrzeuges mit einem Druck zu beaufschlagen. In einem Zustand "Parken" ist es somit möglich, die erste Steuerleitung von der Druckluftversorgung zu trennen und den Steuereingang des Relaisventils durch das erste Magnetventil von der ersten Steuerleitung gegebenenfalls zu trennen, falls ein erster Parkzustand, in dem weder der Anschluss noch der Steuereingang des Relaisventils mit einem Druck beaufschlagt werden, geändert werden soll in einen zweiten Parkzustand, bei dem der Anschluss über die erste Steuerleitung mit einem Druck beaufschlagt wird, damit die Bremse des Anhängers öffnet, ohne dass die Bremse des Zugfahrzeug gelöst wird.

Es ist dabei auch vorgesehen, dass die erste Steuerleitung über ein drittes Magnetventil entlüftet werden kann. So kann das zweite Magnetventil die Versorgung der Steuerleitungen zu der Anhängersteuerventilanordnung und dem Relaisventil sperren. Unabhängig davon kann das dritte Magnetventil die Entlüftung der Steuerleitungen ermöglichen oder sperren. Sperren beide Ventile, wird der aktuell anliegende Druck beibehalten und damit der aktuelle Betriebszustand aufrechterhalten.

Nützlicherweise ist vorgesehen, dass das erste Magnetventil ein 3/2-Wege-Ventil ist. Auf diese Weise kann eine Entkoppelung der Druckverhältnisse an dem Steuereingang des Relaisventils und am Anschluss zur Anhängersteuerventilanordnung realisiert werden, wobei insbesondere ermöglicht wird, den Steuereingang des Relaisventils separat zu entlüften, ohne über das andere mit einer Entlüftung verbundene dritte Magnetventil auch den Anschluss zur Anhängersteuerventilanordnung zu entlüften. Des Weiteren kann so beispielsweise auch eine Schaltung realisiert werden, bei der der Steuereingang des Relaisventils nicht mit einer eigenen Entlüftung verbunden, sondern mit dem Ausgang des Relaisventils kurzgeschlossen wird.

In besonders nützlicher Weise ist vorgesehen, dass das Relaisventil und der Anschluss stufbar mit einem Druck beaufschlagt werden können. Durch permanentes An- und Abschalten des zweiten Magnetventils, das die Druckluftversorgung öffnen und sperren kann, beziehungsweise des dritten Magnetventils, mit dem die Entlüftung geöffnet und gesperrt werden kann, wird ein schrittweise abgestufter/erhöhter bzw. abgestufter/reduzierter Druck eingestellt. Die Höhe und der Gradient des Ausgangsdrucks lässt sich dabei jeweils über das Verhältnis von an- zu abgeschaltetem Zustand des jeweiligen Ventils beeinflussen. Wurde eine Ausführungsform gewählt, in der der Steuereingang des Relaisventils mit seinem Ausgang kurzgeschlossen werden kann, kann auch eine sogenannte Stretch-Brake-Funktion realisiert werden, bei der nur der Anschluss zur Anhängersteuerventilanordnung stufbar angesteuert wird und über das Einbremsen des Anhängers das Gespann aus Zugfahrzeug und Anhänger gestreckt und stabilisiert werden kann.

Weiterhin ist vorgesehen, dass das erste Magnetventil zur Betätigung des Relaisventils ein bistabiles Ventil ist. Im Gegensatz zu monostabilen Ventilen behalten bistabile Ventile ihren Schaltzustand auch bei Wegfall des Steuersignals bei und werden erst von einem weiteren Steuersignal in einen anderen Zustand geschaltet. Hierdurch wird beispielsweise ermöglicht, dass das erste Magnetventil bei einem Ausfall der Spannungsversorgung während eines Parkvorgangs, falls dadurch der Schaltvorgang nicht abgeschlossen oder nicht lange genug ausgeführt wird, nicht auf Entlüften des Eingangs des Relaisventils schaltet und so das Fahrzeug im Fahrzustand verbleibt.

In einer anderen bevorzugten Ausführungsform ist vorgesehen, dass das erste Magnetventil zum Betätigen des Relaisventils ein monostabiles Ventil ist. Hiermit kann eine besonders einfach zu steuernde Schaltung realisiert werden, die sich komplett mit monostabilen Ventilen aufbauen lässt. Dabei ist nach jedem stromlosen Zustand der aktuelle Schaltzustand des Ventils immer eindeutig durch dessen Ruhezustand definiert, in den das Ventil zurückfällt, wenn keine Schaltspannung anliegt. In der vorliegenden Erfindung wird der stromlose Ruhezustand dadurch festgelegt, dass der Steuereingang des Relaisventils mit dessen Ausgang kurzgeschlossen wird. Beispielsweise wird so erreicht, dass bei Ausfall der Spannungsversorgung während eines Fahrzustandes, bei dem der Ausgang des Relaisventils unter hohem Druck steht, der Steuereingang des Relaisventils ebenfalls weiter unter Druck bleibt, so dass der Fahrzustand erhalten bleibt.

In einer besonders bevorzugten Ausführungsform ist es vorgesehen, dass das zweite und das dritte Magnetventil im stromlosen Zustand geschlossen sind. Auf diese Weise lässt sich insbesondere ein verbessertes FailSafe-Verhalten der Parkbremsventil-Anordnung erreichen. Bei einem Ausfall der Spannungsversorgung werden so die jeweils gerade aktuellen Druckverhältnisse am Anschluss zur Anhängersteuerventilanordnung und am ersten Magnetventil, das die Beaufschlagung des Steuereingangs des Relaisventils reguliert, beibehalten. So bleiben die zuletzt eingestellten Betriebszustände erhalten und unerwünschte oder potentiell sicherheitskritische Schaltzustände werden vermieden. Zum Beispiel wird auch bei Ausfall der Spannungsversorgung die Parkbremse des Zugfahrzeugs oder des Anhängers nicht sperren, wenn ein Fahrzustand vorliegt. Insbesondere auch bei einem Ausfall der Ventilsteuerung in einem Zustand eines stufbaren Beaufschlagens mit einem Druck bleiben die Druckniveaus am Anschluss und am Steuereingang des Relaisventils im Wesentlichen unverändert. So gilt auch, dass, wenn das Fahrzeug in einem Zustand einer gestuften Notbremsung war, dieser Zustand, der abgestuften Drücken in der zweiten Steuerleitung zum Parkbrems-Relaisventil und in der ersten Steuerleitung zur Anhängersteuerventilanordnung entspricht, unverändert erhalten bleibt und die abgestufte Notbremsung zu Ende geführt wird. Entsprechend werden die Parkbremsen nicht freigegeben, wenn keine Spannungsversorgung vorhanden ist, das heißt, ein Fahrzeug, bei dem durch einen Fehler die Spannungsversorgung nicht gewährleistet ist, kann auch nicht wegfahren.

Nützlicherweise ist es vorgesehen, dass die Parkbremsventilanordnung des Weiteren einen Drucksensor und eine elektronische Steuereinheit umfasst, wobei die elektronische Steuereinheit Signale des Drucksensors empfängt und elektrische Signale zum Betätigen der Magnetventile ausgibt. Mit einem Drucksensor kann am Ausgang des Relaisventils der dort anliegende Druck erfasst werden. Die elektronische Steuereinheit kann das Messsignal verarbeiten und die Informationen über den Betriebszustand der Parkbremse verarbeiten. Diese können, zum Beispiel über ein Kommunikationsnetzwerk des Fahrzeugs, beispielsweise ein CAN, mit dem die elektronische Steuereinheit mit anderen Steuergeräten im Fahrzeug kommunizieren kann, an ein Dashboard im Fahrerhaus weitergeleitet werden. Weiterhin dient die elektronische Steuereinheit dazu, die Magnetventile anzusteuern. So wird das Messsignal der Druckmessung am Ausgang des Relaisventils beispielsweise dazu verwendet, in einem Zustand des stufbaren Bremsens den abgestuften Druck zu messen. Dieser wird von der elektronischen Steuereinheit aufbereitet und zur Regelung des dritten Magnetventils verwendet.

Die Erfindung ist in besonders nützlicher Weise dadurch weitergebildet, dass die Parkbremsventilanordnung in eine elektronische Luftaufbereitungseinheit integriert ist. Dies ermöglicht eine kostengünstige Implementation der elektronischen Steuerkomponenten und einen energiesparenden Betrieb des pneumatischen Systems.

Die Erfindung wird nun mit Bezug auf die begleitenden Zeichnungen anhand bevorzugter Ausführungsformen beispielhaft erläutert

### Es zeigen:

- Figur 1: eine schematische Darstellung eines Nutzfahrzeugs mit einem Bremssystem, das eine erfindungsgemäße Parkbremsventilanordnung umfasst;
- Figur 2: eine schematische Darstellung einer ersten erfindungsgemäßen Parkbremsventilanordnung, die ein bistabiles 3/2-Wege-Magnetventil zur Steuerung eines Parkbrems-Relaisventils verwendet;
- Figur 3: eine schematische Darstellung der ersten erfindungsgemäßen Parkbremsventilanordnung im Betriebszustand "Fahren";
- Figur 4: eine weitere schematische Darstellung der ersten erfindungsgemäßen Parkbremsventilanordnung im Betriebszustand "Fahren";
- Figur 5: eine schematische Darstellung der ersten erfindungsgemäßen Parkbremsventilanordnung im Betriebszustand "Parken";
- Figur 6: eine weitere schematische Darstellung der ersten erfindungsgemäßen Parkbremsventilanordnung im Betriebszustand "Parken";
- Figur 7: eine schematische Darstellung der ersten erfindungsgemäßen Parkbremsventilanordnung bei einer stufbaren Druckerhöhung;
- Figur 8: eine schematische Darstellung der ersten erfindungsgemäßen Parkbremsventilanordnung im Betriebszustand "Trailer Test";
- Figur 9: eine weitere schematische Darstellung der ersten erfindungsgemäßen Parkbremsventilanordnung im Betriebszustand "Traiter Test";

- Figur 10: eine schematische Darstellung einer zweiten erfindungsgemäßen Parkbremsventilanordnung, die ein monostabiles 3/2-Wege-Magnetventil zur Steuerung eines Parkbrems-Relaisventils verwendet;
- Figur 11: eine schematische Darstellung der zweiten erfindungsgemäßen Parkbremsventilanordnung im Betriebszustand "Fahren";
- Figur 12: eine weitere schematische Darstellung der zweiten erfindungsgemäßen Parkbremsventilanordnung im Betriebszustand "Fahren";
- Figur 13: eine schematische Darstellung der zweiten erfindungsgemäßen Parkbremsventilanordnung im Betriebszustand "Parken";
- Figur 14: eine weitere schematische Darstellung der zweiten erfindungsgemäßen Parkbremsventilanordnung im Betriebszustand "Parken";
- Figur 15: eine schematische Darstellung der zweiten erfindungsgemäßen Parkbremsventilanordnung bei einer stufbaren Druckerhöhung;
- Figur 16: eine schematische Darstellung der zweiten erfindungsgemäßen Parkbremsventilanordnung im Betriebszustand "Trailer Test" und
- Figur 17: eine weitere schematische Darstellung der zweiten erfindungsgemäßen Parkbremsventilanordnung im Betriebszustand "Traiter Test".

Bei der nachfolgenden Beschreibung der Zeichnungen bezeichnen gleiche Bezugszeichen gleiche oder vergleichbare Komponenten.

Eine durchgezogene Linie symbolisiert dabei eine unter einem erhöhten Druck stehende pneumatische Verbindung, eine mit längeren Strichen gestrichelt gezeichnete Linie eine nicht unter erhöhtem Druck stehende Verbindung.

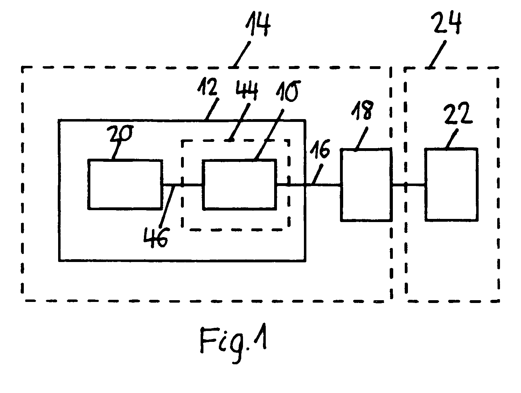

Figur 1 zeigt eine schematische Darstellung eines Nutzfahrzeugs 14 mit einem Bremssystem 12, das eine erfindungsgemäße Parkbremsventilanordnung 10 umfasst, die in eine elektronische Luftaufbereitungseinheit 44 integriert ist und die eine pneumatische Verbindung 46 zu den Parkbremsen 20 des Nutzfahrzeugs und einen Anschluss 16 zu einer Anhängersteuerventilanordnung 18 aufweist, die mit den Parkbremsen 22 eines Anhängers 24 verbunden ist.

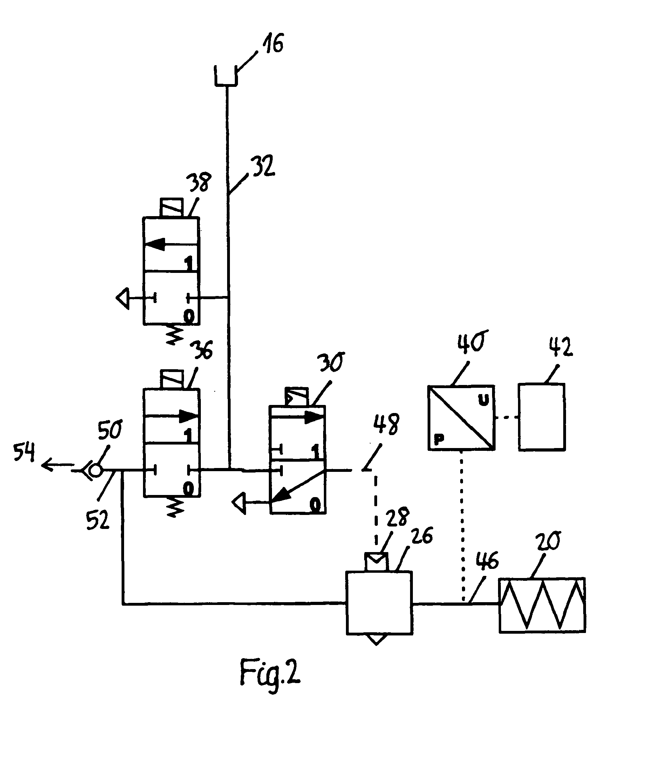

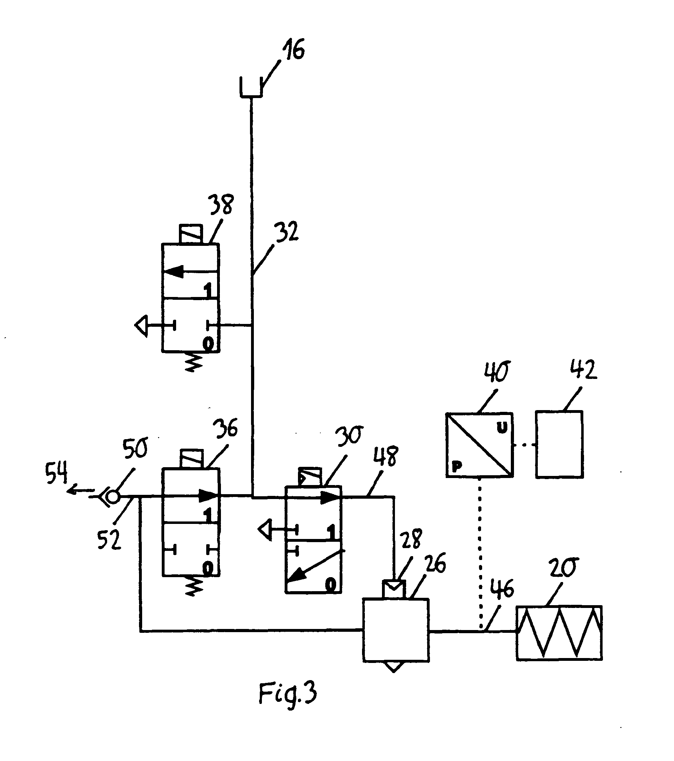

Figur 2 zeigt eine schematische Darstellung einer ersten Ausführungsform für eine erfindungsgemäße Parkbremsventilanordnung 10, die ein bistabiles erstes 3/2-Wege-Magnetventil 30 zur Steuerung eines Parkbrems-Relaisventils 26 verwendet, mit dem die pneumatische Verbindung 46 zu den Nutzfahrzeug-Parkbremsen 20 mit einem Druck beaufschlagt werden können. Das Relaisventil 26 verfügt über einen Steuereingang 28, der über eine pneumatische zweite Steuerleitung 48 mit dem Ausgang des bistabilen ersten 3/2-Wege-Magnetventils 30 verbunden ist. In einem Schaltzustand "1" ist ein Eingang des ersten Magnetventils 30 über eine pneumatische erste Steuerleitung 32 mit dem Anschluss 16 und dem Ausgang eines im stromlosen Zustand "0" gesperrten monostabilen zweiten 2/2-Wege-Magnetventils 36 verbunden ist, über das die erste Steuerleitung 32 in einem Schaltzustand "1" mit Druckluft beaufschlagt werden kann, die über ein Rückschlagventil 50 und eine pneumatische Verbindung 52 von einer Druckluftquelle 54 zur Verfügung gestellt wird. In einem Schaltzustand "0" entlüftet das erste 3/2-Wege-Magnetventil 30 die zweite Steuerleitung 48. Im Schaltzustand "0" des zweiten 2/2-Wege-Magnetventils 36 wird die erste Steuerleitung 32 von der Druckluftquelle 54 getrennt. Über die pneumatische Verbindung 52 wird außerdem, sofern das Parkbrems-Relaisventil 26 auf Durchlass geschaltet ist, die pneumatische Verbindung 46 mit Druckluft versorgt, so dass die Parkbremse 20 gelöst wird. Die erste Steuerleitung 32 ist mit einem dritten im stromlosen Zustand "0" gesperrten monostabilen 2/2-Wege-Magnetventil 38 verbunden, über die sie in einem Schaltzustand "1" entlüftet wird. Zusätzlich ist ein Drucksensor 40 vorgesehen, der den Druck in der pneumatischen Verbindung 46 misst und die Messwerte an eine elektronische Steuereinheit 42 weiterleitet. Diese verarbeitet das Messsignal und gewinnt so Informationen über den Betriebszustand der Parkbremse 20. Diese können dann über ein Kommunikationsnetzwerk des Fahrzeugs, beispielsweise ein CAN, mit dem die elektronische Steuereinheit mit anderen Steuergeräten im Fahrzeug kommunizieren kann, an ein Dashboard im Fahrerhaus weitergeleitet werden. Außerdem steuert die elektronische Steuereinheit 42 die Schaltzustände der Magnetventile 30, 36, 38, wodurch verschiedene Betriebszustände der Parkbremsventilanordnung 10 realisiert werden, die anhand der Figuren 3 bis 9 erläutert werden und in der Tabelle 1 zusammengefasst sind:

**Tabelle 1, Schaltzustände der Magnetventile 30, 36, 38**

| **Betriebszustand** | **Magnetventil 36** | **Magnetventil 30** | **Magnetventil 38** |
|---|---|---|---|
| Fahren 1 | 1 | 1 | 0 |
| Fahren 2 | 0 | 1 | 0 |
| Stufbare Druckverringerung | 0 | 1 | 1 |
| Stufbare Druckerhöhung | 0 | 1 | 1 |
| Parken 1 | 0 | 1 | 1 |
| Parken 2 | 0 | 0 | 0 |
| Trailer Test 1 | 1 | 0 | 0 |
| Trailer Test 2 | 0 | 0 | 1 |

Figur 3 zeigt eine Parkbremsventilanordnung entsprechend Figur 2, die sich in einem ersten Betriebszustand "Fahren" befindet, bei dem die erste Steuerleitung 32 bei gesperrtem dritten Magnetventil 38 über das elektrisch auf Durchlass "1" geschaltete zweite Magnetventil 36 und aufgrund des ebenfalls elektrisch auf Durchlass "1" geschalteten ersten Magnetventils 30 auch die zweite Steuerleitung 48 des Relaisventils 26 mit einem Druck beaufschlagt werden, wodurch dieses die Druckluftzufuhr zur Parkbremse 20 des Nutzfahrzeugs ermöglicht. Diese sind hier als Federspeicherbremsen vorgesehen, die durch den anliegenden Druck gelöst werden, so dass das Fahrzeug bewegt werden kann. Der Drucksensor 40 misst am Relaisventilausgang in diesem Zustand den Druck. Diese Information wird von der elektronischen Steuereinheit 42 verarbeitet. Gleichzeitig ist auch der Anschluss 16 zur Anhängersteuerventilanordnung 18 mit einem Druck beaufschlagt, die Parkbremsen des Anhängers sind gelöst und das Nutzfahrzeug-Anhänger-Gespann kann bewegt werden.

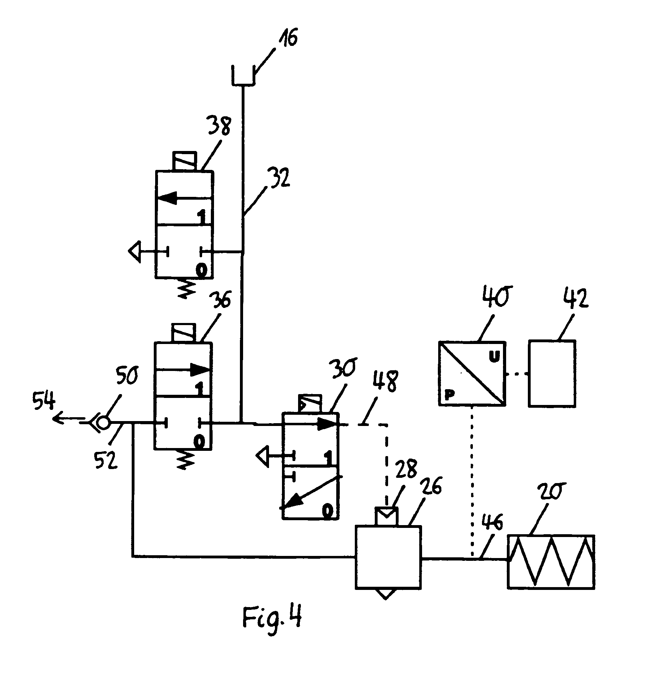

Figur 4 zeigt eine Parkbremsventilanordnung entsprechend Figur 2, die sich in einem weiteren Betriebszustand "Fahren" befindet. Nachdem, wie in Figur 2 gezeigt, der Fahrzustand durch ein Lösen der Parkbremsen hergestellt wurde, fällt das zweite Magnetventil 36 wieder in seinen stromlosen Zustand "0". Das bistabile erste Magnetventil 30 bleibt unverändert im Schaltzustand "1". Auch das dritte Magnetventil 38 bleibt weiter gesperrt. Das zweite Magnetventil 36 sperrt zwar die Druckversorgung, würde der Drucksensor 40 aber einen Druckabfall in den Federspeicherbremsen registrieren, kann das zweite Magnetventil 36 auch wieder öffnen und eine Nachversorgung mit Druckluft ermöglichen. Das Failsafe-Verhalten der Schaltung bei Ausfall der Spanungsversorgung der Magnetventile 30, 36, 38 lässt nicht zu, dass eine sicherheitskritische Situation entsteht, da die Ventile in ihren Schaltstellungen verharren, die Druckverhältnisse konstant bleiben und das Fahrzeug während der Fahrt so auch bei Stromausfall im Fahrzustand bleibt.

Anhand von Figur 4 kann auch der Betriebszustand "stufbares Bremsen", also eine stufbare Druckverringerung in den Steuerleitungen verdeutlicht werden. Ist das der Belüftung dienende zweite Magnetventil 36 in seinem stromlos geschlossenen Zustand "0", ist die Druckversorgung der Steuerleitungen abgesperrt. Nun wird durch wiederholtes An- und Abschalten des der Entlüftung dienenden dritte Magnetventils 38 immer wieder kurzzeitig die Entlüftung geöffnet, so dass sich schrittweise ein abgestuft reduzierter Druck in den Steuerleitungen 32, 48 einstellt, wobei sich die Höhe und der Gradient des Ausgangsdrucks über das Verhältnis von an- zu abgeschaltetem Zustand des dritten Magnetventils 38 einstellen lässt. Das dritte Magnetventil 38 wird in den Sperrzustand geschaltet, sobald sich der gewünschte Druck eingestellt hat, und so das Druckniveau gehalten. Da das erste Magnetventil 30 sich im Schaltzustand "1" befindet, wird der abgestufte Druck nicht nur über den Anschluss 16 an die Anhängersteuerventilanordnung, sondern auch an das Relaisventil 26 weitergegeben, so dass sich auch an der Federspeicher-Parkbremse des Nutzfahrzeugs ein abgestufter Druck einstellt. Der abgestufte Druck am Anschluss 16 bewirkt, dass auch der Anhänger gestuft gebremst werden kann.
Die Regelung des dritten Magnetventils 38 erfolgt dabei durch die elektronische Steuereinheit 42 auf der Grundlage der vom Sensor 40 gelieferten Messwerte.

Bei Ausfall der Spannungsversorgung bleibt das bistabile erste Magnetventil 30 in seinem Schaltzustand "1", so dass die Steuerleitungen 30 und 48 verbunden bleiben. Da das dritte Magnetventil 38 im stromlosen Zustand sperrt, bleibt das aktuelle Druckniveau in den Steuerleitungen erhalten.

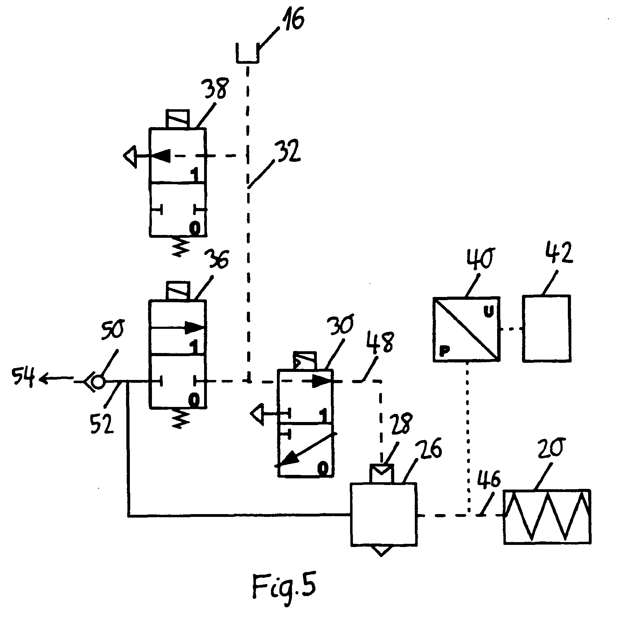

Figur 5 zeigt eine Parkbremsventilanordnung entsprechend Figur 2 in einem ersten Parkbetriebszustand. Dazu wird das erste Magnetventil 30 in die Schaltstellung "1" geschaltet, während das zweite Magnetventil 36 die Druckluftzufuhr sperrt und das dritte Magnetventil 38 die erste Steuerleitung 32 und damit der Steuereingang 28 des Relaisventils 26 und der Anschluss 16 zur Anhängersteuerventilanordnung entlüftet. So werden die Federspeicherbremsen entlüftet und das Fahrzeug kann nicht mehr bewegt werden. Der Drucksensor 40 misst in diesem Zustand keinen Druck. Diese Information wird von der elektronischen Steuereinheit 42 aufbereitet und über das CAN an das Dashboard im Fahrerhaus weitergeleitet. Die Parkbremse ist eingelegt. Anschließend wird das dritte Magnetventil 38 wieder in seinen stromlosen Zustand "0" versetzt. Da die erste Steuerleitung 32 und der Anschluss 16 drucklos sind, ist ein Parkzustand erreicht, bei dem die Betriebsbremse des Fahrzeugs mitbremst. Das erste Magnetventil 30 wird in eine Stellung "0" geschaltet, so dass der bereits drucklose Steuerkanal 48 mit seiner eigenen Entlüftung verbunden wird. Im Fall eines Ausfalls der Spannungsversorgung während des Parkvorgangs, ist das FailSafe-Verhalten dadurch gegeben, dass, falls das der Entlüftung dienende dritte Magnetventil 38 nicht zum Abschluss des Schaltvorgangs kommt oder nicht lange genug geschaltet ist, die Steuerleitungen 32, 48 nicht entlüftet werden, so dass das Fahrzeug und der Anhänger im Fahrzustand bleiben. Wenn das erste Magnetventil 30 nicht zum Abschluss seines Schaltvorgangs oder ist es nicht lange genug geschaltet, bleibt das Fahrzeug im Fahrzustand, da die zweite Steuerleitung 48 nicht entlüftet wird.

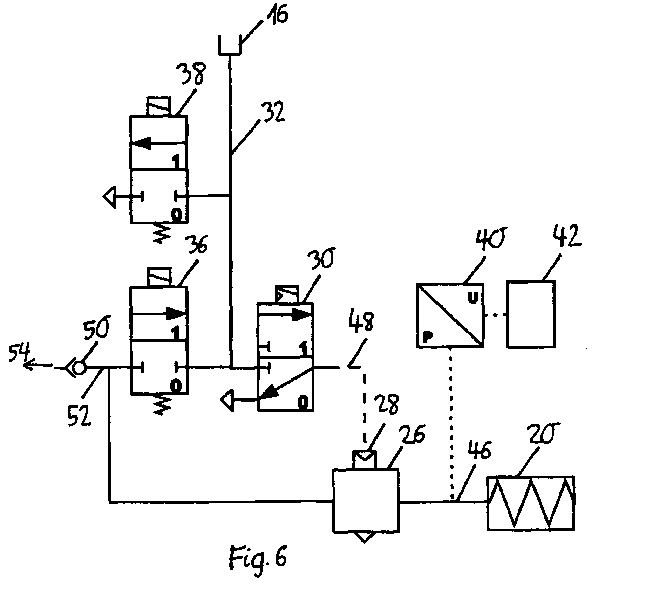

Figur 6 zeigt eine Parkbremsventilanordnung entsprechend Figur 2 in einem zweiten Parkbetriebszustand. Dabei ist das erste Magnetventil 30 so geschaltet, dass die zweite Steuerleitung 48 entlüftet wird und die erste Steuerleitung 32 von dieser getrennt ist. Das zweite Magnetventil 36 wird zuerst so geschaltet, dass die erste Steuerleitung 32 mit einem Druck beaufschlagt wird, anschließend wird es wieder in den stromlosen Sperrzustand "0" versetzt. Das dritte Magnetventil 38 sperrt die Entlüftung. So ist die erste Steuerleitung 32 und damit der Anschluss 16 zur Anhängersteuerventilanordnung mit einem Druck beaufschlagt und ein Parkzustand erreicht, bei dem der Anhänger nicht mitbremst. Bei Ausfall der Spannungsversorgung ist das FailSafe-Verrhalten dadurch gegeben, dass, falls das zweite Magnetventil 36 nicht zum Abschluss des Schaltvorgangs kommt oder nicht lange genug geschaltet ist, so dass die erste Steuerleitung 32 nicht vollständig belüftet wird, das Fahrzeug im Parkzustand und der Anhänger in einem teilgebremsten zustand bleibt.

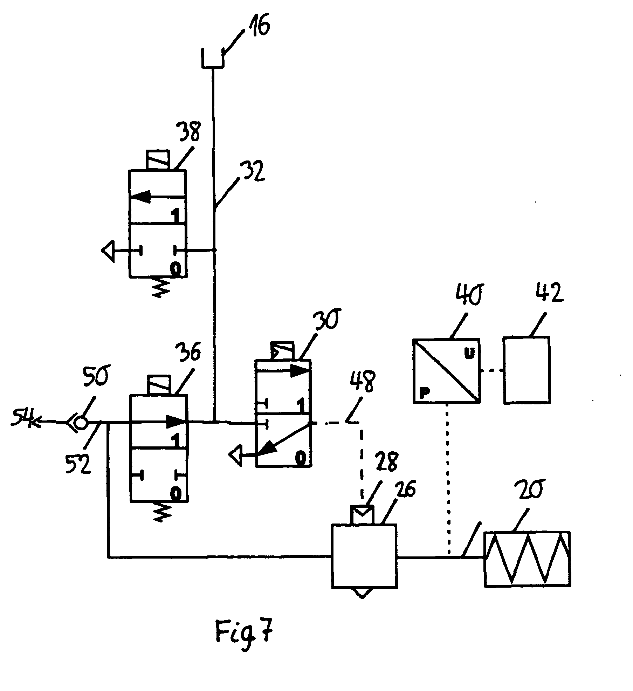

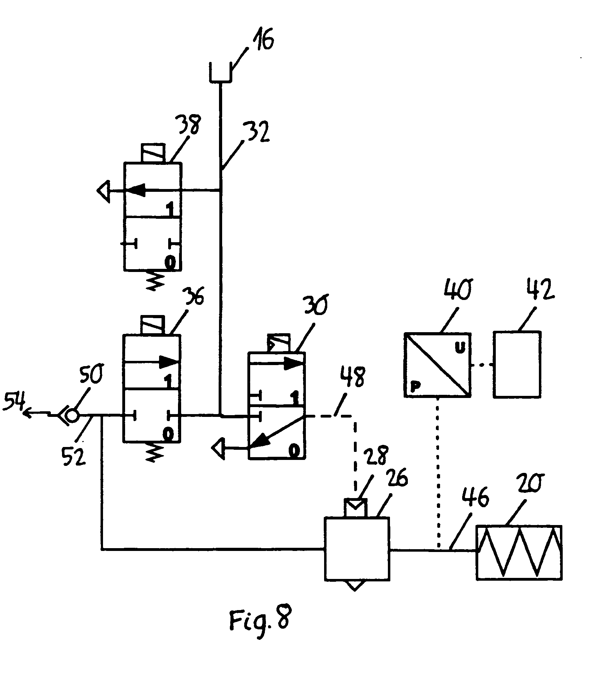

Die Figuren 7 und 8 zeigen Parkbremsventilanordnungen entsprechend Figur 2, wobei die sogenannte Trailer-Test-Funktion durchgeführt wird. Dabei steht die erste Steuerleitung unter Druck, so dass der Anhänger nicht mitbremst, während das Nutzfahrzeug in einem Parkzustand ist. Danach wird die erste Steuerleitung 32 über das dritte Magnetventil 38 entlüftet und der Parkzustand hergestellt, bei dem der Anhänger mitbremst.

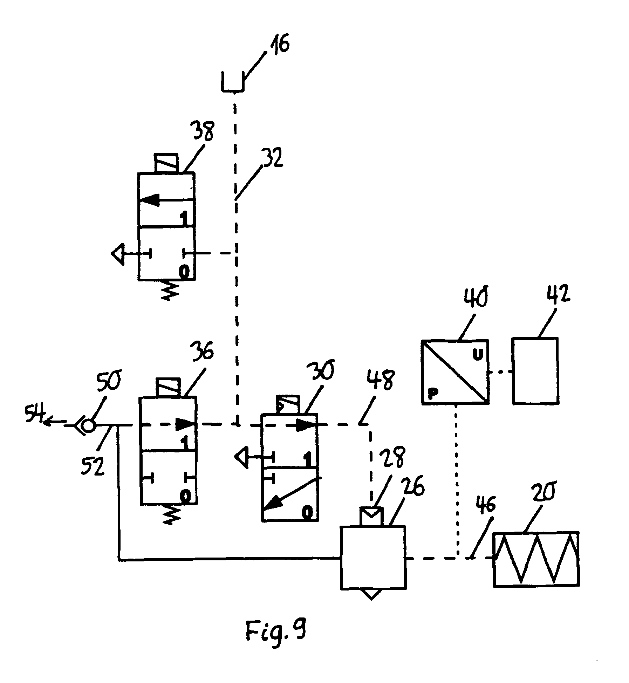

Figur 9 zeigt eine Parkbremsventilanordnung entsprechend Figur 2 in einem stufbaren Bremsbetriebszustand, bei dem stufbar Druck in den Steuerleitungen 32, 48 aufgebaut wird. Das dritte Magnetventil 38 bleibt geschlossen. Durch wiederholtes An- und Abschalten des zweiten Magnetventils 36 wird schrittweise ein abgestuft erhöhter Druck eingestellt, wobei sich die Höhe und der Gradient des Ausgangsdrucks über das Verhältnis von an- zu abgeschaltetem Zustand des zweiten Magnetventils 36 festlegen lässt. Das erste Magnetventil 30 befindet sich in Schaltstellung "1". Wenn der gewünschte Druck erreicht ist, kann das zweite Magnetventil 36 sperren und das Druckniveau in den Steuerleitungen 32, 48 bleibt erhalten. Über den Anschluss 16 wird der abgestufte Druck an die Anhängersteuerventilanordnung weitergegeben. Über das Relaisventil 26 wird auch ein abgestufter Druck in Richtung Federspeicherbremsen des Nutzfahrzeugs ausgegeben. Die Regelung der stufbaren Druckerhöhung erfolgt von der elektronischen Steuereinheit 42 auf der Grundlage der Messdaten des Sensors 40. Fällt die Spannungsversorgung aus, bleibt das bistabile erste Magnetventil 30 in seinem Schaltzustand "1", das zweite Magnetventil 36 sperrt im stromlosen Zustand, so dass die aktuellen Druckniveaus eingesperrt werden, die Bremsung weitergeführt wird und eine sicherheitskritische Situation vermieden wird.

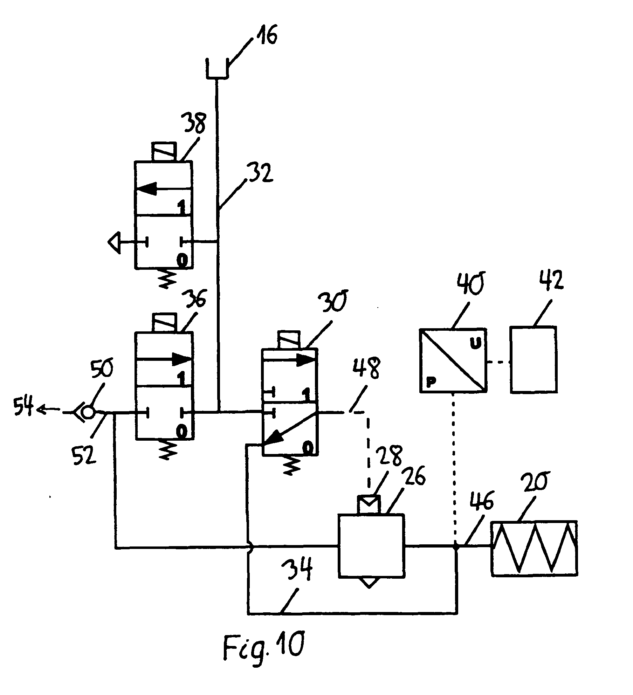

Bei der nachfolgenden Beschreibung der in den Figuren 10 bis 17 offenbarten zweiten Ausführungsform wird nur auf Unterschiede zu der in den Figuren 2 bis 9 dargestellten ersten Ausführungsform eingegangen, wobei bei identischen oder ähnlichen Bauteilen dieselben Bezugszeichen verwendet werden.

Figur 10 zeigt eine schematische Darstellung einer zweiten Ausführungsform für eine erfindungsgemäße Parkbremsventilanordnung 10, die ein monostabiles erstes 3/2-Wege-Magnetventil 30 zur Steuerung eines Parkbrems-Relaisventils 26 verwendet, mit dem die pneumatische Verbindung 46 zu den Nutzfahrzeug-Parkbremsen 20 mit einem Druck beaufschlagt werden kann. Die gezeigte Schaltung ähnelt der in Figur 2 gezeigten ersten Ausführungsform, jedoch wird statt eines bistabilen ersten Magnetventils 30 ein monostabiles 3/2-Wege-Ventil 30 verwendet.

Im Schaltzustand "0" wird die zweite Steuerleitung 48 des Parkbrems-Relaisventils über eine pneumatische Verbindung 34 mit der pneumatischen Verbindung 46 am Ausgang des Relaisventils 26 verbunden.

**Tabelle 2, Schaltzustände der Magnetventile 30, 36, 38**

| **Betriebszustand** | **Magnetventil 36** | **Magnetventil 30** | **Magnetventil 38** |
|---|---|---|---|
| Fahren 1 | 1 | 1 | 0 |
| Fahren 2 | 0 | 0 | 0 |
| Fahren 3 | 1 | 0 | 0 |
| Stufbare Druckverringerung | 0 | 1 | 1 |
| Stufbare Druckerhöhung | 1 | 1 | 0 |
| Parken 1 | 0 | 1 | 1 |
| Parken 2 | 0 | 0 | 0 |
| Trailer Test 1 | 1 | 0 | 0 |
| Trailer Test 2 | 0 | 0 | 1 |
| Stretch Brake | 0 | 0 | 1 |

Auf diese Weise wird ermöglicht, dass, auch wenn sich das monostabile erste 3/2-Wege-Ventil in einem Zustand "0" befindet, die zweite Steuerleitung 48 also von der ersten Steuerleitung 32 getrennt ist, ein Fahrzustand beibehalten werden kann. Desweiteren kann mit dieser erfindungsgemäßen Ausführungsform auch eine sogenannte Stretch-Brake-Funktion realisiert werden, bei der nur der Anschluss 16 zur Anhängersteuerventilanordnung stufbar angesteuert wird und über das Einbremsen des Anhängers das Gespann aus Zugfahrzeug und Anhänger gestreckt und stabilisiert werden kann.

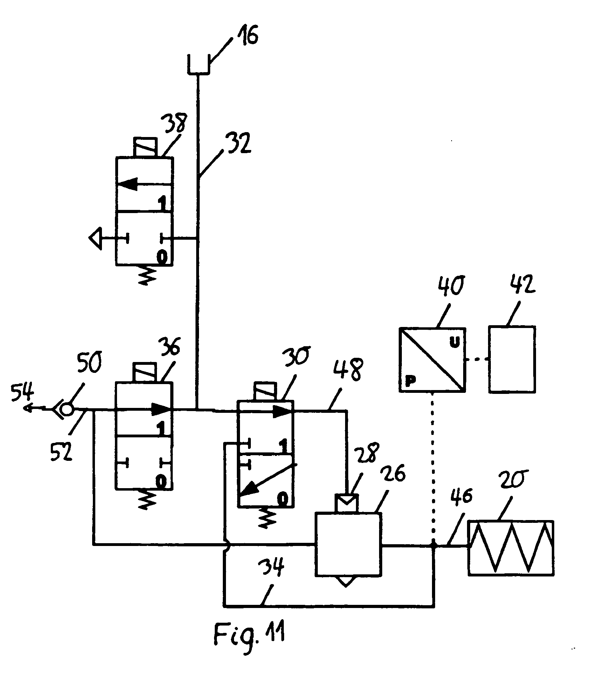

Figur 11 zeigt eine Parkbremsventilanordnung entsprechend Figur 10, die sich in einem ersten Betriebszustand "Fahren" befindet.

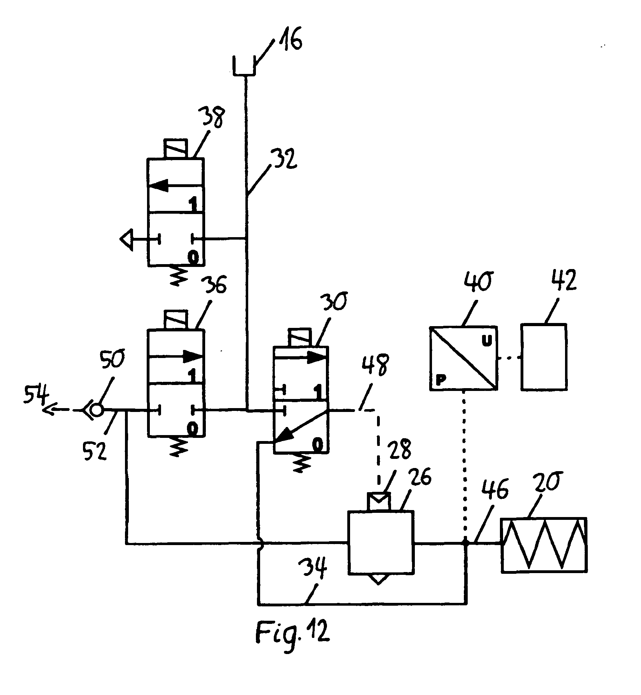

Figur 12 zeigt eine Parkbremsventilanordnung entsprechend Figur 10, die sich in einem zweiten Betriebszustand "Fahren" befindet, wobei sich das monostabile erste Magnetventil 30 in der Schaltstellung "0" befindet, wodurch der auf der pneumatischen Verbindung 46 anliegende Druck auf den Steuereingang des Relaisventils 26 auf den Steuereingang des ersten Magnetventils 30 rückgekoppelt wird, so dass die Parkbremse, auch bei einem Ausfall der Spannungsversorgung für das erste Magnetventil 30 geöffnet bleibt.

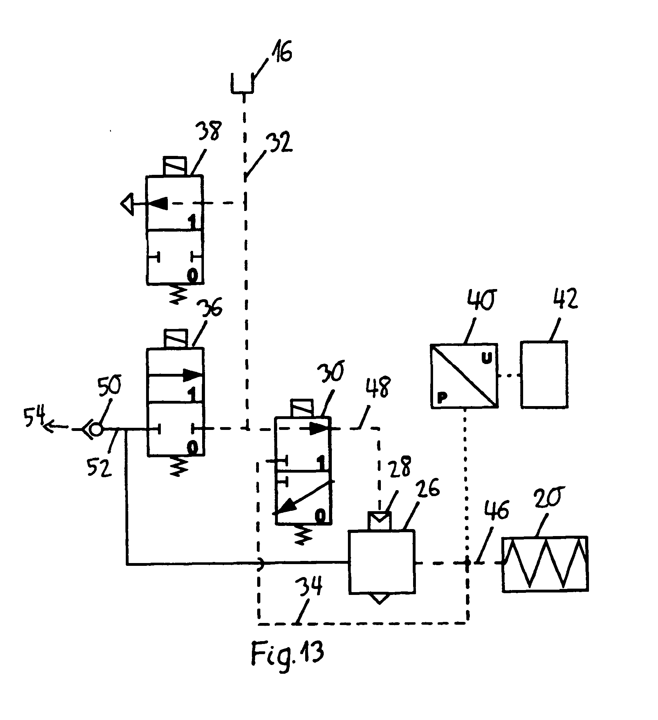

Figur 13 zeigt eine Parkbremsventilanordnung entsprechend Figur 10, die sich in einem ersten Parkbetriebszustand befindet.

Ebenso kann anhand von Figur 13 der Betriebszustand des stufbaren Bremsens mit einem stufbaren Druckabbau gezeigt werden. Das Verhalten des Systems entspricht dabei dem der ersten gezeigten Ausführungsform im selben Betriebszustand. Ein Unterschied im FailSafe-Verhalten, also dem Verhalten bei Ausfall der Spannungsversorgung für die Magnetventile, liegt darin, dass in der in Figur 13 gezeigten Ausführungsform bei Ausfall der Spannung am monostabilen ersten Magnetventil 30 die zweite Steuerleitung 48 und der Ausgang des Relaisventils 26 kurzgeschlossen werden. Abhängig vom aktuellen Druckniveau und der Charakteristik des Relaisventils kann sich der Ausgangsdruck zu den Federspeichern verändern, so dass sich die Bremswirkung verstärkt oder abschwächt.

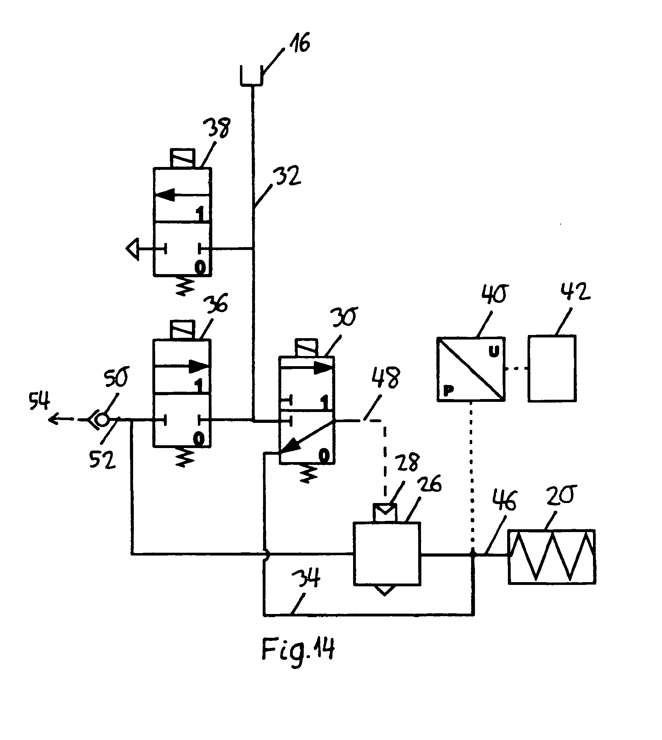

Figur 14 zeigt eine Parkbremsventilanordnung entsprechend Figur 10, die sich in einem zweiten Parkbetriebszustand befindet.

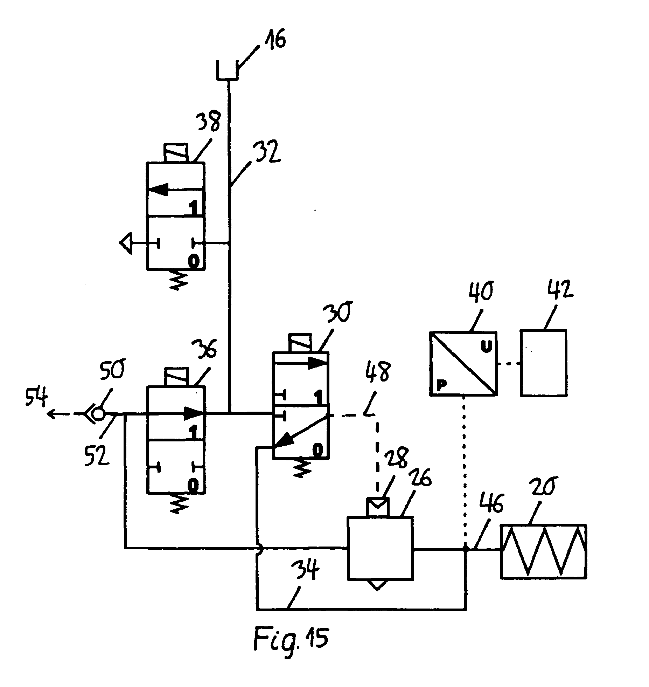

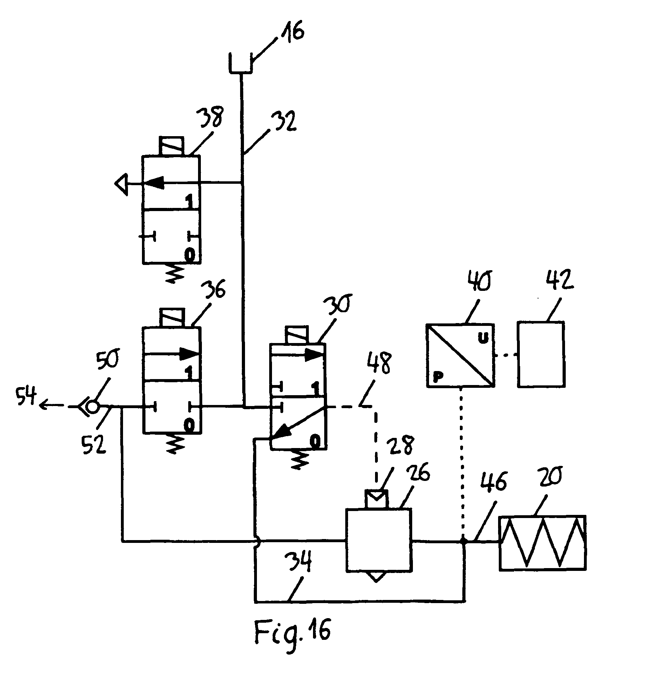

Figur 15 und Figur 16 zeigen Parkbremsventilanordnungen entsprechend Figur 10, die sich in einem ersten und zweiten Betriebszustand befinden, in dem die Trailer-Test-Funktion durchgeführt wird.

Desweiteren kann anhand von Figur 16 die sogenannte Stretch-Brake-Funktion verdeutlicht werden. Dabei wird nur der Anschluss 16 zur Anhängersteuerventilanordnung stufbar angesteuert. Das stufbare Ansteuern des Relaisventils 26 und damit der Federspeicher-Parkbremse 20 des Nutzfahrzeugs wird unterbunden, da das erste Magnetventil 30 in Schaltstellung "0" die zweite Steuerleitung 48 von der ersten Steuerleitung 32 abtrennt und statt dessen mit dem Ausgang des Relaiventils 26 verbindet. Ein wiederholtes Schalten des dritten Magnetventils 38 erzeugt daher einen abgestuften Druck am Anschluss 16.

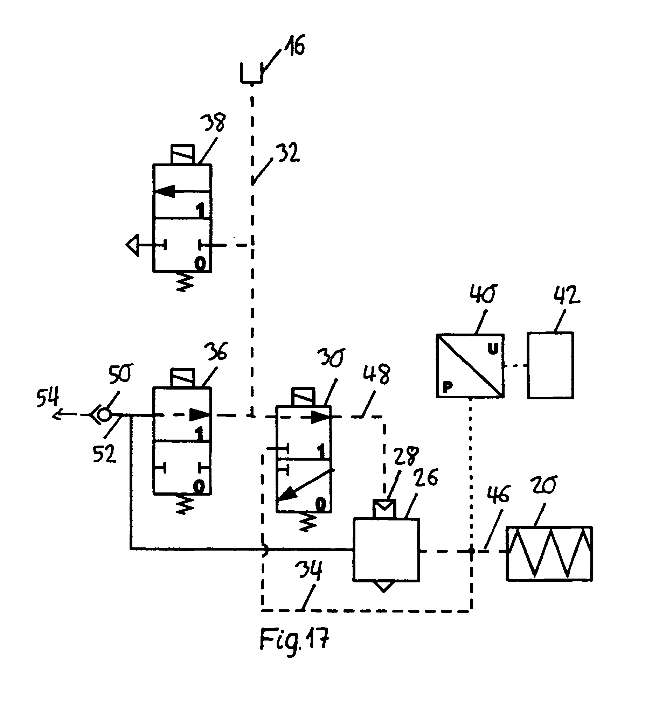

Figur 17 zeigt eine Parkbremsventilanordnung entsprechend Figur 10, die sich in einem Bremszustand des stufbaren Druckaufbaus befindet. Das Verhalten des Systems entspricht dabei dem der ersten gezeigten Ausführungsform im selben Betriebszustand. Ein Unterschied im FailSafe-Verhalten, also dem Verhalten bei Ausfall der Spannungsversorgung für die Magnetventile, liegt darin, dass in der in Figur 17 gezeigten Ausführungsform bei Ausfall der Spannung am monostabilen ersten Magnetventil 30 die zweite Steuerleitung 48 und der Ausgang des Relaisventils 26 kurzgeschlossen werden. Abhängig vom aktuellen Druckniveau und der Charakteristik des Relaisventils kann sich der Ausgangsdruck zu den Federspeichern verändern, so dass sich die Bremswirkung verstärkt oder abschwächt.

### Bezugszeichenliste:

- 10: Parkbremsventilanordnung
- 12: Bremssystem
- 14: Nutzfahrzeug
- 16: Anschluss
- 18: Anhängersteuerventilanordnung
- 20: Parkbremsen des Nutzfahrzeugs
- 22: Parkbremsen eines Anhängers
- 24: Anhänger
- 26: Parkbrems-Relaisventil
- 28: Steuereingang des Parkbrems-Relaisventils
- 30: 3/2-Wege-Magnetventil
- 32: pneumatische Steuerleitung
- 34: pneumatische Verbindung
- 36: 2/2-Wege-Magnetventil
- 38: 2/2-Wege-Magnetventil
- 40: Drucksensor
- 42: elektronische Steuereinheit
- 44: elektronische Luftaufbereitungseinheit
- 46: pneumatische Verbindung
- 48: pneumatische Steuerleitung
- 50: Rückschlagventil
- 52: pneumatische Verbindung
- 54: Druckluftquelle

## Patentansprüche

1. Elektrisch gesteuerte Parkbremsventilanordnung (10) für ein Bremssystem (12) eines Nutzfahrzeuges (14), wobei die Parkbremsventilanordnung (10) einen Anschluss (16) aufweist, der dazu vorgesehen ist, mit einer Anhängersteuerventilanordnung (18) verbunden zu werden, und wobei die Parkbremsventilanordnung (10) dazu ausgelegt ist, in einer ersten Parkbremsbetriebsart die Parkbremsen (20) des Nutzfahrzeuges (14) zu betätigen und den Anschluss (16) so mit Druck zu beaufschlagen, dass die Parkbremsen (24) eines an die Anhängersteuerventilanordnung (18) angeschlossenen Anhängers (24) ebenfalls betätigt werden, wobei die Parkbremsventilanordnung (10) weiterhin dazu ausgelegt ist, in einer zweiten Parkbremsbetriebsart die Parkbremsen (20) des Nutzfahrzeugs (14) zu betätigen und den Anschluss (16) so mit Druck zu beaufschlagen, dass die Parkbremsen (22) eines an die Anhängersteuerventilanordnung (18) angeschlossenen Anhängers (24) nicht betätigt werden, **dadurch gekennzeichnet, dass** die Parkbremsventilanordnung ein Relaisventil (26) zum Betätigen der Parkbremsen (20) des Nutzfahrzeugs (14) umfasst, wobei ein Steuereingang (28) des Relaisventils (26) mit dem Ausgang eines ersten Magnetventils (30) verbunden ist und ein Eingang des ersten Magnetventils (30) über eine erste Steuerleitung (32) mit dem Anschluss (16) und dem Ausgang eines zweiten Magnetventils (36) verbunden ist, über das die erste Steuerleitung (32) mit einem Druck beaufschlagt werden kann, und dass die erste Steuerleitung (32) über ein drittes Magnetventil (38) entlüftet werden kann.

2. Parkbremsventilanordnung nach Anspruch 1, **dadurch gekennzeichnet, dass** das erste Magnetventil (30) ein 3/2-Wege-Ventil ist.

3. Parkbremsventilanordnung nach Anspruch 1 oder Anspruch 2, **dadurch gekennzeichnet, dass** das Relaisventil (26) und der Anschluss (16) stufbar mit einem Druck beaufschlagt werden können.

4. Parkbremsventilanordnung nach einem der Ansprüche 1 bis 3, **dadurch gekennzeichnet, dass** das erste Magnetventil (30) zur Betätigung des Relaisventils (26) ein bistabiles Ventil ist.

5. Parkbremsventilanordnung nach einem der Ansprüche 1 bis 3, **dadurch gekennzeichnet, dass** das erste Magnetventil (30) zum Betätigen des Relaisventils (26) ein monostabiles Ventil ist.

6. Parkbremsventilanordnung nach einem der Ansprüche 1 bis 5, **dadurch gekennzeichnet, dass** das zweite und das dritte Magnetventil (36, 38) im stromlosen Zustand geschlossen sind.

7. Parkbremsventilanordnung nach einem der Ansprüche 1 bis 6, **dadurch gekennzeichnet, dass** sie des Weiteren einen Drucksensor (40) und eine elektronische Steuereinheit (42) umfasst, wobei die elektronische Steuereinheit (42) Signale des Drucksensors (40) empfängt und elektrische Signale zum Betätigen der Magnetventile (30, 36, 38) ausgibt.

8. Parkbremsventilanordnung nach einem der vorhergehenden Ansprüche, die in eine elektronische Luftaufbereitungseinheit (44) integrierbar ist.

## Claims

1. Electrically controlled park brake valve assembly (10) for a brake system (12) of a commercial vehicle (14), wherein the park brake valve assembly (10) has a connection (16) which is provided for connecting to a trailer control valve assembly (18), and wherein the park brake valve assembly (10) is designed for actuating the park brakes (20) of the commercial vehicle (14) in a first park brake mode and for applying pressure to the connection (16) in such a way that the park brakes (22) of a trailer (24) connected to the trailer control valve assembly (18) are likewise actuated, and wherein the park brake valve assembly (10) is further designed for actuating the park brakes (20) of the commercial vehicle (14) in a second park brake mode and for applying pressure to the connection (16) in such a way that the park brakes (22) of a trailer (24) connected to the trailer control valve assembly (18) are not actuated, **characterised in that** the park brake valve assembly comprises a relay valve (26) for actuating the park brakes (20) of the commercial vehicle (14), wherein a control input (28) of the relay valve (26) is connected to the output of a first solenoid valve (30) and an input of the first solenoid valve (30) is connected via a first control line (32) to the connection (16) and to the output of a second solenoid valve (36) via which a pressure can be applied to the first control line (32), and **in that** the first control line (32) can be vented via a third solenoid valve (38).

2. Park brake valve assembly according to claim 1, **characterised in that** the first solenoid valve (30) is a 3/2-way valve.

3. Park brake valve assembly according to claim 1 or claim 2, **characterised in that** a pressure can be applied to the relay valve (26) and the connection (16) in a progressive manner.

4. Park brake valve assembly according to any of claims 1 to 3, **characterised in that** the first solenoid valve (30) for the actuation of the relay valve (26) is a bistable valve.

5. Park brake valve assembly according to any of claims 1 to 3, **characterised in that** the first solenoid valve (30) for the actuation of the relay valve (26) is a monostable valve.

6. Park brake valve assembly according to any of claims 1 to 5, **characterised in that** the second and third solenoid valves (36, 38) are closed in the de-energised state.

7. Park brake valve assembly according to any of claims 1 to 6, **characterised in that** it further comprises a pressure sensor (40) and an electronic control unit (42), wherein the electronic control unit (42) receives signals of the pressure sensor (40) and outputs electric signals for the actuation of the solenoid valves (30, 36, 38).

8. Park brake valve assembly according to any of the preceding claims, which can be integrated into an electronic air preparation unit (44).

## Revendications

1. Agencement (10) de vanne de frein de stationnement commandé électriquement pour un système (12) de frein d'un véhicule (14) utilitaire, l'agencement (10) de vanne de frein de stationnement ayant un raccord (16), qui est prévu pour communiquer avec un agencement (18) de vanne de commande de remorque, et dans lequel l'agencement (10) de vanne de frein de stationnement est conçu pour, dans un premier type de fonctionnement du frein de stationnement, actionner les freins (20) de stationnement du véhicule (14) utilitaire et alimenter le raccord (16) en pression, de manière à ce que les freins (24) de stationnement d'une remorque (24), raccordée à l'agencement (18) de vanne de commande de remorque, soient actionnés également, l'agencement (10) de vanne de frein de stationnement étant conçu en outre pour actionner, dans un deuxième type de fonctionnement du frein de stationnement, les freins (20) de stationnement du véhicule (14) utilitaire et alimenter le raccord (16) en pression, de manière à ce que les freins (22) de stationnement d'une remorque (24), raccordée à l'agencement (18) de vanne de commande de remorque, ne soient pas actionnés, **caractérisé en ce que** l'agencement de vanne de frein de stationnement comprend une vanne (26) relais pour l'actionnement des freins (20) de stationnement du véhicule (14) utilitaire, une entrée (28) de commande de la vanne (26) relais communiquant avec la sortie d'une première électrovanne (30) et une entrée de la première électrovanne (30) communiquant par un premier conduit (32) de commande avec le raccord (16) et avec la sortie d'une deuxième électrovanne (36), par laquelle le premier conduit (32) de commande peut être alimenté en une pression et **en ce que** le premier conduit (32) de commande peut être mis à l'atmosphère par une troisième électrovanne (38).

2. Agencement de vanne de frein de stationnement suivant la revendication 1, **caractérisé en ce que** la première électrovanne (30) est une vanne 3/2 voies.

3. Agencement de vanne de frein de stationnement suivant la revendication 1 ou revendication 2, **caractérisé en ce que** la vanne (26) relais et le raccord (16) peuvent être alimentés en une pression par paliers.

4. Agencement de vanne de frein de stationnement suivant l'une des revendications 1 à 3, **caractérisé en ce que** la première électrovanne (30) pour l'actionnement de la vanne (26) relais est une vanne bistable.

5. Agencement de vanne de frein de stationnement suivant l'une des revendications 1 à 3, **caractérisé en ce que** la première électrovanne (30) pour l'actionnement de la vanne (26) relais est une vanne monostable.

6. Agencement de vanne de frein de stationnement suivant l'une des revendications 1 à 5, **caractérisé en ce que** la deuxième et la troisième électrovannes (36, 38) sont fermées dans l'état sans courant.

7. Agencement de vanne de frein de stationnement suivant l'une des revendications 1 à 6, **caractérisé en ce qu'**il comprend en outre un capteur (40) de pression et une unité (42) électronique de commande, l'unité (42) électronique de commande recevant des signaux du capteur (40) de pression et émettant des signaux électriques pour l'actionnement des électrovannes (30, 36, 38).

8. Agencement de vanne de frein de stationnement suivant l'une des revendications précédentes, qui peut être intégré dans une unité (44) électronique de préparation d'air.
